# EUROPÄISCHE PATENTSCHRIFT

(11) **EP 1 418 135 B1**
(45) Veröffentlichungstag und Bekanntmachung des Hinweises auf die Patenterteilung: **02.05.2007**
(21) Anmeldenummer: 03023414.0
(22) Anmeldetag: 17.10.2003
(51) Int. Cl.: B65D 81/00, A47J 31/40

(54) **Portionspackung und Vorrichtung zur Herstellung eines Aromagetränkes**
Package and device for making an aromatic beverage
Cartouche et dispositif pour pa préparation d une boisson aromatique

(30) Priorität: 08.11.2002 DE 20217411 U
(43) Veröffentlichungstag der Anmeldung: 12.05.2004
(73) Patentinhaber: MELITTA HAUSHALTSPRODUKTE GmbH & Co. Kommanditgesellschaft, D-32427 Minden (DE)
(72) Erfinder: Sachtleben, Andreas, 32427 Minden (DE)
(74) Vertreter: Dantz, Jan Henning

(56) Entgegenhaltungen:
- WO-A-02/074143
- DE-B- 1 221 960
- DE-U- 1 903 458
- DE-U- 8 400 488
- US-A- 6 026 732
- US-A1- 2002 088 807

## Beschreibung

Die vorliegende Erfindung betrifft eine Portionspackung nach dem Oberbegriff des Anspruches 1 sowie eine Vorrichtung zur portionsweisen Herstellung eines Aromagetränkes, insbesondere Kaffee, nach dem Oberbegriff des Anspruches 9. Eine solche Vorrichtung umfasst eine Brühkammer zur Aufnahme einer mit einem Aromaträger gefüllten Portionspackung, wobei die Brühkammer aus einem ortsfesten Teil und einem hiergegen in eine Öffnungsstellung und in eine Schließstellung beweglichen Aufnahmeteil für eine Portionspackung besitzt. Nach dem Einlegen einer Portionspackung und dem Schließen ist die Brühkammer bis auf einen Zulauf für Heißwasser zur Extraktion des Aromaträgers und einem Auslauf für das Aromagetränk allseitig abgedichtet.

Vorrichtungen der vorerwähnten Art sowie Portionspackungen zur Verwendung in derartigen Vorrichtungen sind in vielerlei Ausführungsformen bekannt und erfreuen sich zunehmender Beliebtheit, da einerseits die Zahl der sogenannten Single-Haushalte, für die derartige Vorrichtungen besonders prädestiniert sind, zunimmt und unabhängig davon andererseits derartige Vorrichtungen zunehmend auch in Mehrpersonen-Haushalten für die schnelle, unproblematische Herstellung lediglich einer Portion eines Aromagetränkes, insbesondere Kaffee, gerne verwendet werden.

Grundsätzlich sind derartige Vorrichtungen relativ einfach zu bedienen.

Die Brühkammer wird zum Zwecke des Einlegens einer Portionspackung aus der Schließstellung heraus geöffnet, eine Portionspackung wird in die Brühkammer eingelegt, die Brühkammer wird geschlossen und dann ein Schalter zum Auslösen eines Brühvorganges benötigt.

Nach erfolgter Brühung eines Aromagetränkes kann dann die Portionspackung mit dem ausgelaugten Aromaträger entsorgt werden.

Um ein möglichst gutes Brühergebnis zu erzielen, ist es wichtig, dass die Portionspackung innerhalb der Brühkammer derart zentriert ist, dass das Brühwasser möglichst verlustfrei durch den Aromaträger innerhalb der Portionspackung hindurch geführt wird, was aufgrund der Konstruktion der bekannten Vorrichtungen einerseits sowie aufgrund der bislang verwendeten Portionspackungen nicht immer gewährleistet ist.

In vielen Fällen wird besondere Aufmerksamkeit vom Benutzer einer derartigen Vorrichtung dahingehend verlangt, dass die Portionspackung äußerst sorgfältig in die Brühkammer eingelegt wird. Bei mangelnder Aufmerksamkeit kann die Portionspackung nicht exakt zentriert in die Brühkammer eingesetzt werden mit der Folge, dass ein Teil des Brühwassers gewissermaßen unter Umgehung des Aromaträgers durch die Brühkammer hindurch läuft und somit nicht am Extraktionsprozess teilnimmt. Ein schlechtes Getränkergebnis ist die Folge.

Der vorliegenden Erfindung liegt die Aufgabe zugrunde, eine Portionspackung und eine Vorrichtung der gattungsgemäßen Art zu schaffen, die bei extrem einfacher Handhabung stets ein optimales Brühergebnis sicherstellt. Ferner soll die Portionspackung sich durch eine problemlose Handhabung einerseits und eine praxisgerechte Stabilität andererseits ebenso auszeichnen wie durch die Möglichkeit einer vergleichsweise preiswerten Herstellung.

Diese Aufgabe wird erfindungsgemäß mit einer Portionspackung mit den Merkmalen des Anspruches 1 sowie einer Vorrichtung zur portionsweisen Herstellung eines Armomagetränkes mit den Merkmalen des Anspruches 9 gelöst.

Die Portionspackung weist zumindest zwei gegenüberliegende keilförmig aufeinander zu laufende Seitenwände auf und besitzt somit einen keilförmigen Grundriss. Dabei umfasst die Portionspackung ein topfartiges Unterteil mit einem Boden, einer umlaufenden Seitenwand sowie einem am oberen Ende der Seitenwand sich parallel zur Bodenfläche nach außen erstreckenden Rand und einen Deckel, der auf dem Rand des Unterteiles aufliegt und mit diesem verbunden ist.

Eine derartige Portionspackung ist aufgrund ihrer Keilform, die selbstverständlich der geometrischen Gestaltung der Brühkammer einer erfindungsgemäßen Vorrichtung angepasst ist, ideal zum passgenauen Einsetzen in einer vorbestimmten Position in einer entsprechenden Brühkammer geeignet.

Durch eine Verdichtung der Seitenwand erhält die gesamte Portionspackung eine relativ hohe Stabilität, die durch den umlaufenden und sich nach außen erstreckenden Rand noch zusätzlich erhöht wird. Dieser Rand wird durch den aufliegenden Deckelbereich und die Verbindung ebenfalls einen verstärkten und versteiften Bereich der Portionspackung bilden. Somit ist die Portionspackung gut handhabbar und kann durch die oben erwähnte Gestaltung der Brühkammer innerhalb der Brühkammer gewissermaßen selbsttätig zentriert werden durch endgültiges und sicheres Einschieben in den dafür vorgesehenen Einschub beim Schließen der Brühkammer.

Wenn die Seitenwand der Portionspackung weitestgehend wasserundurchlässig verdichtet ist, ist auch die Gefahr vermieden, dass Brühwasser während des Brühvorganges einen anderen Weg nehmen kann als den durch den Aromaträger hindurch, der sich innerhalb der Portionspackung befindet.

Ein stetig gleichmäßig gutes Brühergebnis ist die zwangsläufige, wünschenswerte Folge dieser Gestaltung.

Zweckmäßigerweise ist die Portionspackung in ihrem sich verjüngenden vorderen Bereich abgeflacht ausgeführt, d. h., daß die keilförmige Portionspackung nicht zu einer Spitze ausläuft. Die Abflachung kann derart groß ausgeführt werden, daß eine relativ große Fläche für den Handgriff eines Abstreifers oder Auswerfers zur Verfügung steht. Bei entsprechend großer Kontaktfläche zwischen der Portionspackung einerseits und einem Abstreifer oder Auswerfer andererseits wird eine hohe Flächenpressung vermieden, so daß das mechanische Auswerfen der Portionspackung ohne Zerstörungsgefahr gewährleistet ist.

Vorzugsweise ist das Unterteil und/oder der Deckel aus einem für die Serienfertigung geeigneten filterfähigen Kunststoff-Vlies oder Kunststoff-Papier-Gemisch hergestellt.

Die erfindungsgemäße Vorrichtung umfasst ein Aufnahmeteil mit einem keilförmigen Einschub für den schmaler werdenden vorderen Bereich einer in ihrer Grundfläche ebenfalls keilförmigen Portionspackung zur Überdeckung für einen vorstehenden Randbereich der Portionspackung, wobei der ortsfeste Teil in seinem dem Einschub gegenüber liegenden Endbereich mit einem Anschlag versehen ist, mittels dessen eine Portionspackung bei geschlossener Brühkammer in einer vorbestimmten Einschubposition fixiert ist.

Die Gestaltung der Brühkammer einer erfindungsgemäßen Vorrichtung mit den vorstehend angegebenen Merkmalen stellt sicher, dass eine Portionspackung bei geschlossener Brühkammer stets eine exakt zentrierte und vorbestimmte Position einnimmt, selbst dann, wenn der Benutzer beim Einlegen der Portionspackung in den Aufnahmeteil nicht die erforderliche Sorgfalt hat walten lassen. Beim Schließen der Brühkammer wird nämlich die keilförmige Portionspackung aufgrund der Gestaltung der Brühkammer ohne Zutun des Benutzers in ihre bestimmungsgemäße Position verschoben, was aufgrund der Keilform der Brühkammer einerseits sowie der Portionspackung andererseits gewährleistet werden kann.

Da der Aufnahmeteil mit einem Einschub und auch mit einer Hinterschneidung zur Überdeckung für einen vorstehenden Randbereich der Portionspackung versehen ist, wird die Portionspackung beim Öffnen der Brühkammer nach erfolgter Aufbrühung eines Aromagetränkes im Einschub festgehalten und kann somit nicht am ortsfesten Teil der Brühkammer durch Adhäsionskräfte haften bleiben, so dass Störungen bei der Entsorgung der ausgelaugten Portionspackung vermieden sind.

Vorteilhafterweise kann der feststehende Teil der Brühkammer mit einer Einrichtung zum Abstreifen oder Ausbürsten einer extrahierten Portionspackung beim Öffnen der Brühkammer versehen sein.

Wie schon erwähnt, ist ein Anhaften der ausgelaugten Portionspackung am feststehenden oder ortsfesten Teil der Brühkammer sicher verhindert, so dass ein automatischer Auswurf der ausgelaugten Portionspackung durch den Auswerfer stets problemlos und störungsfrei möglich ist.

Weitere Merkmale der Erfindung sind Gegenstand weiterer Unteransprüche.

Ein Ausführungsbeispiel der Erfindung ist in den beigefügten Zeichnungen dargestellt und wird im folgenden näher beschrieben.

Es zeigen:
- Figur 1: einen schematisch dargestellten Schnitt durch eine geschlossene und eine Portionspackung aufnehmende Brühkammer einer erfindungsgemäßen Vorrichtung,
- Figur 2: einen der Figur 1 entsprechenden Schnitt durch die geöffnete Brühkammer,
- Figur 3: einen Horizontalschnitt durch die Brühkammer gemäß den Figuren 1 und 2,
- Figur 4: eine Seitenansicht einer erfindungsgemäßen Portionspackung zur Verwendung in einer Brühkammer nach den Figuren 1-3,
- Figur 5: eine perspektivische Darstellung der Portionspackung gemäß Figur 4,
- Figur 6: eine Draufsicht auf die Portionspackung nach den Figuren 4 und 5 mit in andeutungsweise gezeigter Grundfläche einer Brühkammer,
- Figur 7: eine Vorderansicht eines Teils einer erfindungsgemäßen Vorrichtung zur Herstellung eines Aromagetränkes, und
- Figur 8: eine perspektivische Ansicht der Vorrichtung der Figur 7 mit geöffneter Brühkammer.

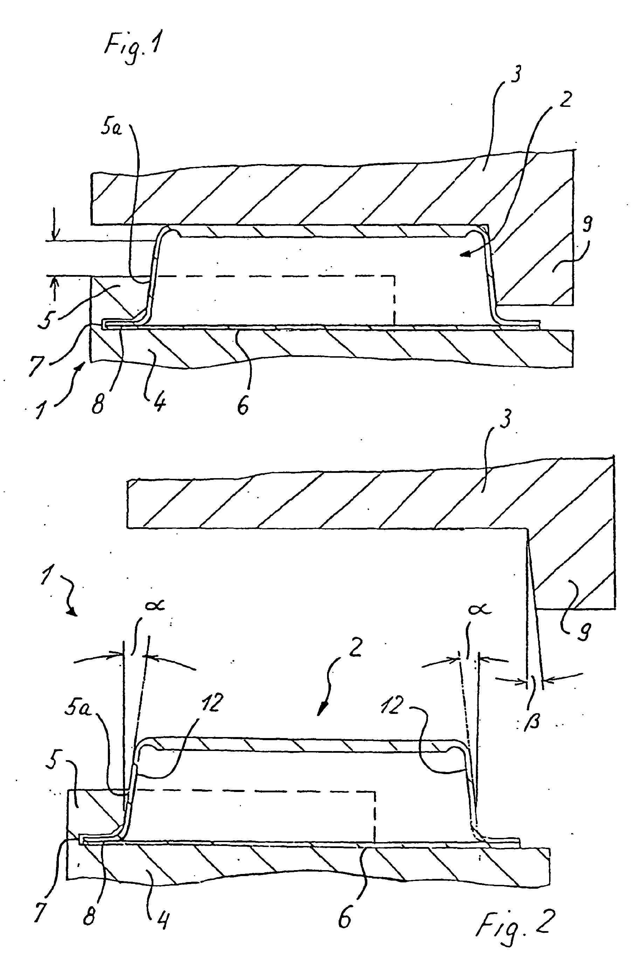

In den Figuren 1-3 ist in stark schematisierter Darstellung eine Brühkammer in einer nicht weiter gezeigten Vorrichtung zur portionsweisen Herstellung eines Aromagetränkes, insbesondere von Kaffee, bezeichnet.

Die Herstellung des besagten Aromagetränkes erfolgt unter Verwendung einer Portionspackung 2, welche in die dafür vorgesehene Brühkammer 1 eingelegt wird.

Da im Zusammenhang mit der vorliegenden Erfindung lediglich die Gestaltung der Brühkammer 1 und die Gestaltung der Portionspackung 2 von Interesse ist, wurde auf die Darstellung von Details der Vorrichtung zur Herstellung eines Aromagetränkes verzichtet.

Die Brühkammer 1 besteht im wesentlichen aus einem ortsfesten Teil 3 und einem demgegenüber beweglichen Aufnahmeteil 4, wobei das Aufnahmeteil 4 zur im wesentlichen formschlüssigen Aufnahme der schon erwähnten Portionspackung 2 bestimmt ist.

Im dargestellten Ausführungsbeispiel ist der bewegliche Aufnahmeteil 4 gegenüber dem ortsfesten Teil 3 der Brühkammer 1 aus einer Schließstellung gemäß Figur 1 in einer Öffnungsstellung gemäß Figur 2 beweglich oder verschiebbar angeordnet.

In der Öffnungsstellung gemäß Figur 2 kann eine Portionspackung 2 bequem in den Aufnahmeteil 4 eingebracht werden. Nach dem Einlegen der Portionspackung 2 in den Aufnahmeteil 4 wird derselbe in Schließstellung zurückbewegt und die Brühkammer 1 dann in beliebiger Weise nach außen hin allseitig abgedichtet bis auf einen Wasserzulauf zum Zuführen von Brühwasser und einen Auslauf für das erzeugte Aromagetränk.

Auf die detailliertere Darstellung des besagten Zulaufes für Heißwasser ist ebenso verzichtet worden wie auf die Darstellung des Auslaufes für das Aromagetränk.

Wesentlich im Zusammenhang mit der vorliegenden Erfindung ist, daß der Aufnahmeteil 4 einen keilförmigen Einschub 5 für die in ihrer Grundfläche ebenfalls keilförmige Portionspackung 2 aufweist und daß dieser Einschub im Auflagebereich 6 der Brühkammer 1 mit einer Hinterschneidung 7 zur Überdeckung für einen vorstehenden Rand 8 der Portionspackung 2 versehen ist und daß der ortsfeste Teil 3 der Brühkammer 1 in seinem dem Einschub 5 gegenüber liegenden Endbereich mit einem Anschlag 9 versehen ist, mittels dessen die Portionspackung 2 bei geschlossener Brühkammer 1 in einer vorbestimmten Endposition innerhalb der Brühkammer 1 fixiert ist.

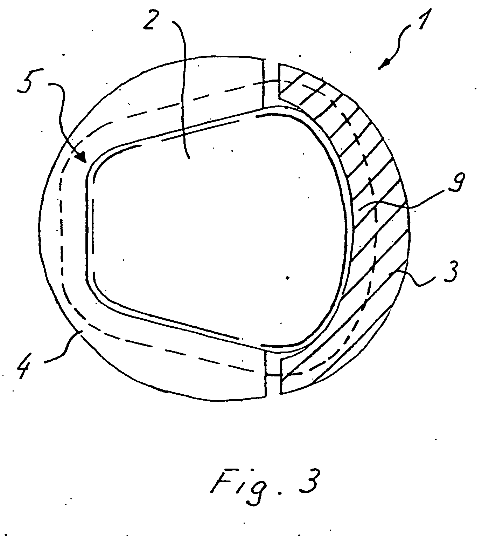

Die Figuren 1 und 3 zeigen sehr anschaulich, daß die Portionspackung 2 auf den Auflagebereich 6 des Aufnahmeteiles 4 aufgelegt wird und mit ihrem umlaufenden Rand 8 schon teilweise in die Hinterschneidung 7 des Einschubes 5 eingeführt werden kann. Dies wird natürlich durch die Keilform des Einschubes 5 sowie durch die Keilform der Portionspackung 2 erheblich erleichtert. Beim Schließen der Brühkammer 1 durch entsprechende Bewegung des Aufnahmeteiles 4 wird die Portionspackung 2 in Anlage zum Anschlag 9 des ortsfesten Teiles 3 der Brühkammer 1 gebracht und gegebenenfalls noch weiter in den Einschub 5 gedrückt. Mit anderen Worten ist es für einen Benutzer nicht erforderlich, für einen absolut korrekten Sitz der Portionspackung 2 innerhalb der Brühkammer 1 zu sorgen, dies erfolgt quasi beim Schließen der Brühkammer 1 selbsttätig dadurch, daß der Anschlag 9 die Portionspackung 2 in jedem Falle in eine vorbestimmte Lage innerhalb der Brühkammer 1 bewegt. Damit ist die Portionspackung 2 innerhalb der Brühkammer 1 stets einwandfrei zentriert, wobei unter "zentriert" im vorliegenden Zusammenhang zu verstehen ist, daß die Portionspackung 2 stets eine für den Brühvorgang optimale Position innerhalb der Brühkammer 1 einnimmt.

Dies ist insoweit wichtig, als Sorge dafür getragen werden soll, daß in die Brühkammer 1 gelangendes Heißwasser praktisch gezwungen werden soll, ausschließlich die Portionspackung 2 zu durchdringen und nicht teilweise an den Außenseiten der Portionspackung 2 vorbeizulaufen.

Durch die Hinterschneidung 7 des Aufnahmeteiles 4 wird außerdem sichergestellt, daß die Portionspackung 2 nicht am ortsfesten Teil 3 anhaften kann, sondern beim Öffnen der Brühkammer 1 stets vom ortsfesten Teil 3 gelöst wird, da, wie schon erwähnt, die Portionspackung 2 vom Aufnahmeteil 4 bzw. von dem Einschub 5 des Aufnahmeteiles 4 festgehalten wird.

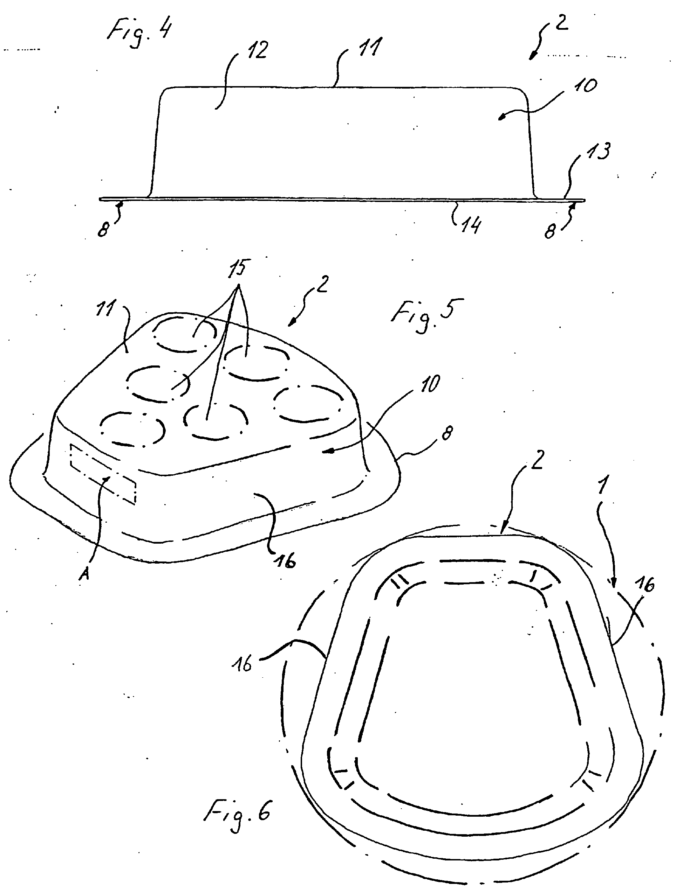

Die Figuren 4-6 zeigen in mehreren Ansichten die schon mehrfach erwähnte Portionspackung 2.

Die Portionspackung 2 besteht im wesentlichen aus einem topfartigen Unterteil 10 mit einem Boden 11, einer umlaufenden Seitenwand 12 mit einem am oberen Ende der Seitenwand 12 sich parallel zur Bodenfläche nach außen erstreckenden Rand 13 und aus einem Deckel 14, der nach dem Befüllen des topfartigen Unterteiles 10 mit einem Aromaträger auf den vorerwähnten Rand 13 aufgelegt und mit diesem Rand 13 verbunden wird. Die Portionspackung 2 weist zwei keilförmig aufeinander zu laufende Seitenwände 16 auf, die der Portionspackung einen keilförmigen Grundriß verleihen.

Das Unterteil 10 der Portionspackung 2 ist aus einem filterfähigen Kunststoff-Vlies oder Kunststoff-Papier-Gemisch hergestellt und zwar vorzugsweise im Tiefziehverfahren. Dabei ist der Bereich der Seitenwand 12 weitgehend wasserundurchlässig verdichtet. Diese Verdichtung der Seitenwand 12 trägt einerseits zur Stabilisierung der Gesamtportionspackung 2 erheblich bei und gewährleistet andererseits, daß kein Brühwasser in unerwünschter Weise durch die Seitenwand 12 austreten kann.

Auch der Deckel 16 ist in vorteilhafter Weise aus einem filterfähigen Kunststoff-Vlies oder aus einem Kunststoff-Papier-Gemisch hergestellt. Die Verbindung des Deckels 14 mit dem Rand 13 des Unterteiles 10 erfolgt vorzugsweise durch ein Versiegeln.

Durch die übereinander liegenden Materiallagen des Randes 13 und des Deckels 14 wird der in die Hinterschneidung 7 des Aufnahmeteiles 4 eingreifende Rand 8 (siehe Figuren 1 und 2) gebildet.

Wie insbesondere aus den Figuren 1 und 2 hervorgeht, ist die umlaufende Seitenwand 12 der Portionspackung 2 ausgehend vom Deckel 14 um den Winkel α konisch verjüngt ausgeführt.

Der entsprechende Anlagebereich 5a des Aufnahmeteiles 4 ist entsprechend abgeschrägt, so daß sich eine zusätzliche Fixierung der Portionspackung 2 im Aufnahmeteil 4 ergibt.

Der Anschlag 9 des ortsfesten Teiles 3 der Brühkammer 1 ist mit einer entsprechenden Abschrägung um den Winkel β versehen, so daß auch dieser Anschlag 9 vollflächig an der gegenüber liegenden Seitenwand 12 der Portionspackung 2 zur Anlage kommt.

Durch die verschieden stark verdichteten Bereiche der Portionspackung 2, insbesondere durch die beträchtliche Verdichtung der Seitenwand 12 und durch eine Verdichtung des umlaufenden Randes 8 erhält die Portionspackung 2 eine Stabilität, die schon die Handhabung, Verpackung und den Transport der Portionspackung 2 erheblich verbessert, was aber auch, wie schon oben ausgeführt wurde, zu einer sehr sicheren und stabilen Lage der Portionspackung 2 innerhalb der Brühkammer 1 beiträgt.

Insgesamt sind die Brühkammer 1 und die Portionspackung 2 optimal aufeinander abgestimmt, so daß ein Benutzer der erfindungsgemäßen Vorrichtung bei Verwendung einer erfindungsgemäßen Portionspackung 2 keine erhöhte Aufmerksamkeit walten lassen muß, um ein optimales Brühergebnis zu erzielen.

In Figur 5 ist angedeutet, daß im Bereich der abgeflachten Schmalseite der Portionspackung 2 eine relativ große Fläche A für die Anlage eines Abstreifers oder dergleichen zur Verfügung steht, wobei durch die Größe dieser Fläche eine relativ geringe spezifische Flächenpressung beim Abstreifen oder Auswerfen der Portionspackung 2 erreicht wird. Eine Zerstörung der Portionspackung 2 beim Auswerfen ist somit praktisch sicher verhindert.

Figur 5 zeigt außerdem, daß der Boden 11 der Portionspackung 2 mit Bereichen 15 versehen sein kann, deren Wasserdurchlässigkeit höher ist als der restliche Bereich des Bodens 11. Dies kann bei der Herstellung des Unterteiles 10 durch unterschiedlich starke Verdichtung des Materials im Bereich des Bodens 11 erreicht werden. Das Gleiche kann entsprechend für den Deckel 14 gelten. Falls die Portionspackung 2 mit besonders wasserdurchlässigen Bereichen 15 versehen ist, sollten diese zweckmäßigerweise so angeordnet sein, daß diese Bereiche 15 entsprechenden Wasserzulauföffnungen innerhalb der Brühkammer 1 unmittelbar gegenüber liegen. Hierdurch kann ein gezieltes, gleichmäßiges Durchtränken des Aromaträgers innerhalb der Portionspackung 2 erheblich gefördert werden.

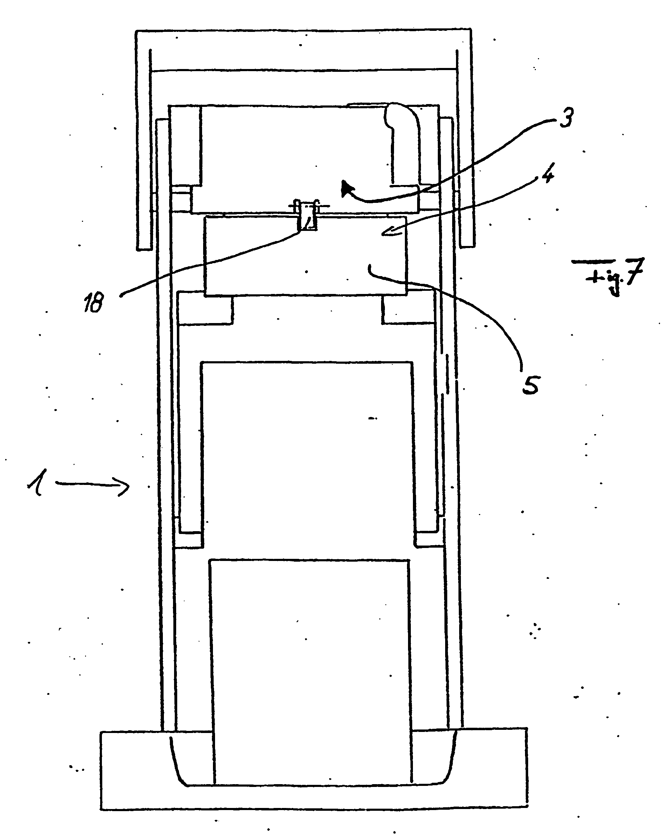

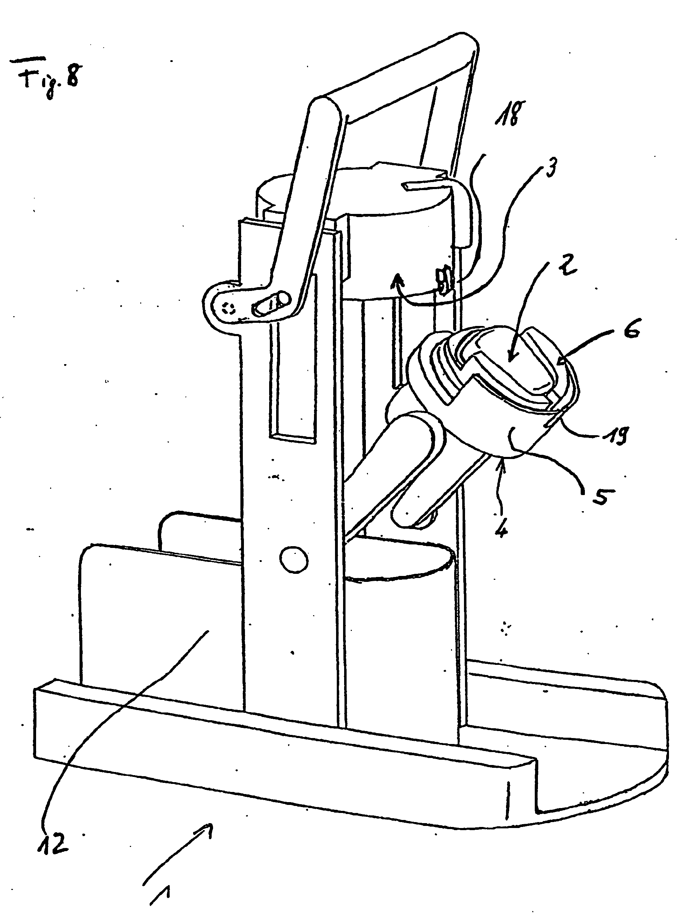

In Fig. 7 und 8 ist eine Vorrichtung zur Herstellung eines Aromagetränkes gezeigt, die eine Brühkammer 1 aufweist, in die eine Portionspackung 2 einlegbar ist. Die Vorrichtung umfasst ein Aufnahmeteil 4 und einem relativ dazu beweglichen keilförmigen Einschub 5 für die in ihrer Grundfläche ebenfalls keilförmige Portionspackung 2. Der Einschub 5 ist in einem die Portionspackung 2 C-förmig umgreifenden Auflagebereich 6 versehen, an dem eine Hinterschneidung 7 zur Überdeckung für einen vorstehenden Rand 8 der Portionspackung 2 angeordnet ist. Beim Schließen der Brühkammer 1 wird die Portionspackung 2 gegen einen hinteren Anschlag 9 gedrückt, der die Portionspackung 2 in eine vorbestimmte Lage innerhalb der Brühkammer 1 bewegt. Die Portionspackung ist somit formschlüssig zentriert in der Brühkammer aufgenommen.

Zum Entfernen einer gebrauchten Portionspackung 2 ist an dem Aufnahmeteil 4 ein nach unten hervorstehender Abstreifer 18 vorgesehen. Durch das Bewegen des Einschubes 5 nach außen greift der Abstreifer 18 mit einem Steg durch einen Schlitz 19 innerhalb der Seitenwand des Einschubes 5 und drückt gegen die dem Schlitz 19 gegenüberliegende Seitenwand der Portionspackung 2, bis die Portionspackung 2 von dem Auflagebereich 6 verschoben wird und nach unten fällt oder einer Entsorgungsstation zugeführt wird. Auch andere Mechaniken zum Entfernen der Portionspackung 2 von dem Auflagebereich 6 können eingesetzt werden.

In dem dargestellten Ausführungsbeispiel ist ein topfförmiges Unterteil 10 sowie ein Deckel 14 vorgesehen. Es ist natürlich auch möglich, die Portionspackung zu "wenden" und ein topfförmiges Oberteil mit einem platten Boden vorzusehen.

## Patentansprüche

1. Portionspackung (2) zur Herstellung eines Aromagetränkes, insbesondere von Kaffee, mit einem topfartigen Unterteil (10) mit einem Boden (11) und einer umlaufenden Seitenwand (12) mit einem am oberen Ende der Seitenwand (12) am Ende sich parallel zur Bodenfläche nach außen erstreckenden Rand (13) und aus einem Deckel (14), der auf dem Rand (13) des Unterteiles (10) aufliegt und mit diesem verbunden ist, wobei zumindest das Unterteil (10) aus einem filterfähigen Material besteht, **dadurch gekennzeichnet, daß** die Portionspackung zumindest zwei gegenüberliegende keilförmig aufeinander zu laufende Seitenwände (16) aufweist.

2. Portionspackung nach Anspruch 1, **dadurch gekennzeichnet, daß** das topfartige Unterteil (10) im Seitenwandbereich weitestgehend wasser-undurchlässig verdichtet ist.

3. Portionspackung nach Anspruch 1 oder 2, **dadurch gekennzeichnet, daß** der Rand (13) gemeinsam mit dem auf ihm aufliegenden Bereich des Deckels (14) etwa im gleichen Maße verdichtet ist wie die umlaufende Seitenwand (12).

4. Portionspackung nach einem der Ansprüche 1 bis 3, **dadurch gekennzeichnet, daß** der Deckel (14) und/oder das topfartige Unterteil (10) aus einem filterfähigen Kunststoff-Vlies oder Kunststoff-Papier-Gemisch hergestellt ist.

5. Portionspackung nach einem der Ansprüche 1 bis 4, **dadurch gekennzeichnet, daß** der Deckel (14) mit dem Rand (13) durch einen Siegelvorgang verbunden ist.

6. Portionspackung nach einem der Ansprüche 1 bis 5, **dadurch gekennzeichnet, daß** der Boden (11) des Unterteiles (10) und/oder der Deckel (14) mit Bereichen (15) versehen ist bzw. sind, deren Wasserdurchlässigkeit größer ist als die Wasserdurchlässigkeit der außerhalb dieser Bereiche (15) liegenden Abschnitte des Bodens (11) und/oder des Deckels (14).

7. Portionspackung nach Anspruch 6, **dadurch gekennzeichnet, daß** die außerhalb der Bereiche (15) liegenden Abschnitte des Bodens (11) und/oder des Deckels (14) gegenüber den besagten Bereichen (15) verdichtet sind.

8. Portionspackung nach einem der Ansprüche 1 bis 7, **dadurch gekennzeichnet, daß** die umlaufende Seitenwand (12) des Unterteiles (10) vom Deckel (14) in Richtung des Bodens (11) sich um einen Winkel α konisch verjüngt.

9. Vorrichtung zur portionsweisen Herstellung eines Aromagetränkes, insbesondere von Kaffee, mit einer Brühkammer (1) zur Aufnahme einer mit einem Aromaträger gefüllten Portionspackung (2), wobei die Brühkammer (1) aus einem ortsfesten Teil (3) und einem hiergegen in eine Öffnungsstellung und in eine Schließstellung beweglichen Aufnahmeteil (4) für eine Portionspackung (2) besteht und nach dem Einlegen einer Portionspackung (2) und dem Schließen bis zu einem Zulauf für Heißwasser zur Extraktion des Aromaträgers und einen Auslauf für das Aromagetränk allseitig abgedichtet ist, **dadurch gekennzeichnet, daß** der Aufnahmeteil (4) einen keilförmigen Einschub (5) für den schmaler werdenden, vorderen Bereich einer in ihrer Grundfläche ebenfalls keilförmigen Portionspackung (2) aufweist, und daß der ortsfeste Teil (3) in seinem dem Einschub (5) gegenüber liegenden Endbereich mit einem Anschlag (9) versehen ist, mittels dessen eine Portionspackung (2) bei geschlossener Brühkammer (1) in einer vorbestimmten Einschubposition fixiert ist.

10. Vorrichtung nach Anspruch 9, **dadurch gekennzeichnet, daß** der Aufnahmeteil (4) im Auflagebereich (6) der Portionspackung (2) mit einer Hinterschneidung (7) zur Überdeckung für einen vorstehenden Randbereich (8) der Portionspackung (2) versehen ist.

## Claims

1. Portion pack (2) for producing an aromatic beverage, in particular coffee, having a cup-like bottom part (10) with a base (11) and an all-round side wall (12) with a border (13), which extends outwards parallel to the base surface at the top end of the side wall (12), and a cover (14), which rests on the border (13) of the bottom part (10) and is connected thereto, at least the bottom part (10) consisting of a material which is capable of filtering, **characterized in that** the portion pack has at least two mutually opposite side walls (16) which run towards one another in a wedge-shaped manner.

2. Portion pack according to Claim 1, **characterized in that** the cup-like bottom part (10) is sealed as far as possible in a water-impermeable manner in the sidewall region.

3. Portion pack according to Claim 1 or 2, **characterized in that** the border (13), together with that region of the cover (14) which rests on it, is sealed approximately to the same extent as the all-round side wall (12).

4. Portion pack according to one of Claims 1 to 3, **characterized in that** the cover (14) and/or the cup-like bottom part (10) are/is produced from a plastic/nonwoven or plastic/paper mixture which is capable of filtering.

5. Portion pack according to one of Claims 1 to 4, **characterized in that** the cover (14) is connected to the border (13) by sealing.

6. Portion pack according to one of Claims 1 to 5, **characterized in that** the base (11) of the bottom part (10) and/or the cover (14) are/is provided with regions (15) with a level of water permeability which is higher than that of those portions of the base (11) and/or of the cover (14) which are located outside these regions (15).

7. Portion pack according to Claim 6, **characterized in that** those portions of the base (11) and/or of the cover (14) which are located outside the regions (15) are sealed in relation to the said regions (15).

8. Portion pack according to one of Claims 1 to 7, **characterized in that** the all-round side wall (12) of the bottom part (10) tapers conically by an angle α in the direction of the base (11) from the cover (14).

9. Apparatus for producing portions of an aromatic beverage, in particular coffee, having a brewing chamber (1) for accommodating a portion pack (2) filled with an aroma carrier, it being the case that the brewing chamber (1) comprises a stationary part (3) and an accommodating part (4) for a portion pack (2), it being possible for the accommodating part to be moved into an open position and into a closed position in relation to the stationary part, and, once a portion pack (2) has been placed in position and the brewing chamber has been closed, the latter is sealed on all sides apart from an inlet for hot water, for the purpose of extracting the aroma carrier, and an outlet for the aromatic beverage, **characterized in that** the accommodating part (4) has a wedge-shaped insert (5) for the narrowing front region of a portion pack (2), which is likewise wedge-shaped over its surface area, and **in that**, in its end region located opposite the insert (5), the stationary part (3) is provided with a stop (9) by means of which a portion pack (2) is fixed in a predetermined insertion position when the brewing chamber (1) is closed.

10. Apparatus according to Claim 9, **characterized in that**, in the bearing region (6) for the portion pack (2), the accommodating part (4) is provided with an undercut (7) for covering over a projecting border region (8) of the portion pack (2).

## Revendications

1. Cartouche (2) pour la fabrication d'une boisson aromatisée, en particulier de café, avec une partie inférieure (10) en forme de godet avec un fond (11) et une paroi latérale (12) continue avec un rebord (13) à l'extrémité supérieure de la paroi latérale (12) s'étendant à l'extrémité vers l'extérieur parallèlement à la surface du fond et formé d'un couvercle (14) qui repose sur le rebord (13) de la partie inférieure (10), et est relié à celui-ci, au moins la partie inférieure (10) étant composée d'un matériau filtrant, **caractérisée en ce que** la cartouche comprend au moins deux parois latérales (16) opposées coniques dirigées l'une vers l'autre.

2. Cartouche (2) selon la revendication 1, **caractérisée en ce que** la partie inférieure (10) en forme de godet est comprimée en étant largement imperméable à l'eau dans la zone de la paroi latérale.

3. Cartouche selon la revendication 1 ou 2, **caractérisée en ce que** le rebord (13) conjointement avec la zone du couvercle (14) reposant sur celui-ci est comprimé approximativement selon la même étendue que la paroi latérale (12) continue.

4. Cartouche selon l'une des revendications 1 à 3, **caractérisée en ce que** le couvercle (14) et/ou la partie inférieure (10) en forme de godet sont fabriqués dans un matériau non tissé en matière synthétique ou dans un mélange de papier et de matière synthétique filtrants.

5. Cartouche selon l'une des revendications 1 à 4, **caractérisée en ce que** le couvercle (14) est relié au rebord (13) par un procédé de scellement.

6. Cartouche selon l'une des revendications 1 à 5, **caractérisée en ce que** le fond (11) de la partie inférieure (10), et/ou le couvercle (14), est (sont) muni(s) de zones (15) dont la perméabilité à l'eau est supérieure à celle des sections du fond (11) et/ou du couvercle (14) situés à l'extérieur de ces zones (15).

7. Cartouche selon la revendication 6, **caractérisée en ce que** les sections du fond (11) et/ou du couvercle (14), situés à l'extérieur des zones (15), sont comprimés par rapport aux zones mentionnées (15).

8. Cartouche selon l'une des revendications 1 à 7, **caractérisée en ce que** la paroi latérale (12) continue de la partie inférieure (10) se rétrécit coniquement du couvercle (14) en direction du fond (11) à un angle α.

9. Dispositif de fabrication d'une boisson aromatisée en cartouche, en particulier de café, avec une chambre d'ébouillantage (1) pour recevoir une cartouche (2) remplie d'une source d'arôme, la chambre d'ébouillantage (1) étant composée d'une partie fixe (3) et d'une partie de réception (4) d'une cartouche (2), laquelle est au contraire mobile dans une position d'ouverture et dans une position de fermeture, et est étanche sur tous les côtés après l'introduction d'une cartouche (2) et la fermeture jusqu'à une arrivée d'eau chaude pour l'extraction de la source d'arôme et une sortie pour la boisson aromatisée, **caractérisé en ce que** la partie de réception (4) comprend un dispositif insérable (5) cunéiforme pour la zone avant devenant plus étroite d'une cartouche (2) également cunéiforme dans sa surface de base, et **en ce que** la partie fixe (3) est munie dans sa zone d'extrémité opposée au dispositif insérable (5) d'une butée (9) au moyen de laquelle une cartouche est fixée dans une position d'insertion prédéfinie, lorsque la chambre d'ébouillantage (1) est fermée.

10. Dispositif selon la revendication 9, **caractérisée en ce que** la partie de réception (4) dans la zone d'appui (6) de la cartouche (2) est munie d'une contre-dépouille arrière (7) destinée à recouvrir une zone marginale (8) saillante de la cartouche (2).
